# EUROPEAN PATENT SPECIFICATION

(11) **EP 3 795 704 B1**
(45) Date of publication and mention of the grant of the patent: **21.02.2024**
(21) Application number: 19197716.4
(22) Date of filing: 17.09.2019
(51) Int. Cl.: C22B 3/04, C22B 3/22, C22B 3/44, C22B 7/00, C22B 59/00, C25C 1/06, C25C 7/00, H01F 41/02

(54) **A METHOD FOR SELECTIVE RECOVERY OF RARE EARTH ELEMENTS FROM ND-FE-B MAGNET SCRAPS BASED ON ELECTROLYSIS**
VERFAHREN ZUR SELEKTIVEN RÜCKGEWINNUNG VON SELTENERDELEMENTEN AUS ND-FE-B-MAGNET-ABFÄLLEN AUF BASIS VON ELEKTROLYSE
PROCÉDÉ DE RÉCUPÉRATION SÉLECTIVE D'ÉLÉMENTS DE TERRES RARES À PARTIR DE DÉCHETS D'AIMANTS ND-FE-B BASÉ SUR L'ÉLECTROLYSE

(43) Date of publication of application: 24.03.2021
(73) Proprietor: Institut "Jozef Stefan", 1000 Ljubljana (SI)
(72) Inventor: Xu, Xuan, 1000 Ljubliana (SI); Strum, Saso, 1294 Visnja Gora (SI); Zuzek Rozman, Kristina, 1000 Ljubljana (SI)
(74) Representative: Jersan, Tatjana

(56) References cited:
- US-A- 5 129 945
- US-A1- 2015 047 469
- Lj J Pavlovic ET AL: "Electrodeposition of Fe Powder from Citrate Containing Electrolytes", Int. J. Electrochem. Sci. International Journal, 1 December 2010 (2010-12-01), pages 1898-1910, XP055670890, Retrieved from the Internet: URL:http://www.electrochemsci.org/papers/v ol5/5121898.pdf [retrieved on 2020-02-21]

## Description

### Field of invention:

The present invention relates to a method for recovery of rare-earth elements from Nd-Fe-B magnet scraps.

Rare-earth elements (REEs) have excellent electronic, optic, catalytic, and magnetic properties, making them useful for a wide range of applications, such as catalysts, phosphors and pigments, batteries, permanent magnets (PMs), and ceramics. The global REE consumption was estimated at 119,650 metric tons in the form of rare-earth oxides (REOs) in 2016 with catalysts being the largest segment, followed by PMs. The annual growth rate of global REE demand is expected to increase by 5% by 2020. Among all the REEs, neodymium (Nd) and dysprosium (Dy) are mainly used in the neodymium-iron-boron (Nd-Fe-B) PMs which represent a major share of the REE market by volume as well as by value. Typically, Nd-Fe-B PMs contain between 60-70 wt.% iron (Fe), 28-35 wt.% REEs (Pr, Nd, Tb, and Dy), 1-2 wt.% boron (B), and 0-4 wt.% cobalt (Co). The benefit of adding Dy in place of Nd is that it improves coercivity and therefore temperature tolerance. Terbium (Tb) can perform in a similar function but is rarely used due to its high price. Praseodymium (Pr) can directly substitute Nd to some extent without a severe impact on the magnetic properties. Co is commonly added to improve corrosion resistance. The main applications of the Nd-Fe-B PMs are electric vehicles (EVs), industrial motors, wind turbines (WTs), magnetic resonance imaging (MRI) and hard disk drives (HDDs). It was reported that Nd-Fe-B PMs presumably bear a high recycling potential due to the high number of applications and expected high growth rates mainly driven by electromobility and wind turbines. There are two main sources of the Nd-Fe-B PMs to be recycled. One is magnet scraps, including the magnets failing the quality control during manufacturing processes and the magnets coming from the end-of-life products, e.g., EVs and WTs. Another one is the magnet swarfs/slags, generated during magnet finishing processes, e.g., shaping and polishing.

### State-of-the-art:

Diverse methodologies hitherto for recycling Nd-Fe-B PMs are currently under development which can be broadly classified into direct re-use, alloy reprocessing and raw material recovery. Sintered Nd-Fe-B PMs are multi-phase materials: they have REE-rich phases at the grain boundaries, which contain the vast majority of the oxygen, and represent about 10-12% of the magnet, while the matrix Nd₂Fe₁₄B phase, which is practically oxygen-free, contributes to 85-87% of the whole magnet. Direct re-use of the Nd-Fe-B PMs, such as re-sintering and hydrogenation disproportionation and desorption and recombination (HDDR) is regarded as the best ecological and economical recycling route due to the low energy input and no waste generation. This process is, however, applicable only on magnet scraps, and it leaves the REOs phase which are formed in the grain boundaries during the life span to remain in the grain boundary without its further separation and consequently, the addition of extra REE materials (e.g., 2-10 wt.% NdH₂) is generally required to reach fully dense recycled magnets. With every recycling cycle, therefore, a higher volume of non-ferromagnetic phases (REOs and added NdH₂) would result in poorer magnetic properties. For the actual reprocessing of the magnetic alloys from Nd-Fe-B PMs, several processes are under investigation, such as re-melting and electro-slag refining. All these options allow feeding of the cleaned magnet scrap into the established production chain for Nd-Fe-B magnets. However, these processes operate at 750-950 °C, making them very energy-intensive and the yield of the alloys has traditionally been a problem due to the loss of a significant amount materials caused by evaporation under high temperatures. For raw material recovery, like REEs, e.g., Nd and Dy, various approaches such as glass-slag extraction, gas-phase extraction and hydrometallurgical methods have been developed in recent years. Hydrometallurgical processes can be regarded as the most promising way, as they require relatively simple equipment to extract the REEs in continuous operation at mild temperatures and are generally applicable to both magnet scraps and magnet swarfs/slags for high-purity REEs recovery. In conventional hydrometallurgical processes, the Nd-Fe-B magnets are first completely dissolved with a mineral acid solution, e.g., HCl or H₂SO₄ solution. The roasting pretreatment at 900 °C is generally applied to completely oxidize Fe to Fe₂O₃ which would favour the Fe removal step after the complete acid-based leaching process of the magnet is done. It should be noted that for the complete dissolution of 1,000 kg of Nd-Fe-B magnet scraps, the required amounts of H₂SO₄ is 2,172 kg from which 272 kg is for Nd and 1,900 kg is for Fe. Moreover, the consumption of base for Fe removal and effluent neutralization is correspondingly 1,600 kg of NaOH or 1,100 kg of CaO. These large amounts of acid, alkali and other precipitation agents cannot be recycled in the whole process and consequently a considerable amount of wastewater (around 10 m³/ 1,000 kg Nd-Fe-B magnets) is produced. Besides the Nd, Nd-Fe-B magnets often contain admixtures of Dy, Tb or Pr, so that a mixture of REEs is obtained after recycling. The end-products after the whole hydrometallurgical process are RE trifluorides (REF₃) or RE oxalates, which are obtained by adding HF or oxalic acid after the removal of Fe. REF₃ and REOs (obtained by calcination of RE oxalate) are ready to be used in all REE-related applications, however, apart from the permanent magnets.

In hydrometallurgical processes, acid leaching is the most important step as it determines the extraction efficiency of valuable metals and their concentrations in the leachate. Up to date, two different leaching routes are under investigation: a complete leaching route and a selective leaching route. For instance, H₂SO₄ solution is used to leach Nd-Fe-B magnet scraps due to the formation of RE sulfate followed by precipitating neodymium-(sodium or ammonium) sulfate double salt. For treating 1 kg of Nd-Fe-B magnet scraps, 10 L of a 2 M H₂SO₄ solution is required (solid-to-liquid (S:L) ratio of 10% w/v) which completely dissolves the magnet scraps and keeps the pH low enough to prevent precipitation of Fe(OH)₃. The pH is then raised to 1.5 by NaOH, KOH or NH₄OH, at which a neodymium-(sodium or ammonium) sulfate double salt, Nd₂(SO₄)₃·M₂SO₄·6H₂O (M = Na, K, NH₄) is formed. Iron remains in solution as long as the pH does not exceed 2.0. The sulfate double salt can be converted to either NdF₃ by leaching in HF solution or Nd oxalate by adding an aqueous oxalic acid solution. The other REEs like Dy, Pr and Tb present in the magnet scraps can also be recovered as the RE sulfate double salt and be converted into the RE fluoride or oxalate. RE oxalate can then be calcined to form RE₂O₃. Both the REF₃ and RE₂O₃ can be reduced to the corresponding RE metal by calciothermic reduction or molten-salt electrolysis. After removal of the RE sulfate double salts, oxygen gas is bubbled or H₂O₂ solution is added to fully oxidize divalent iron to trivalent iron that precipitates as yellow jarosite, NaFe₃(SO₄)₂(OH)₆, which is easier to filter than Fe(OH)₃. Alternatively, roasting pre-treatment at 900 °C can be applied to completely oxidize Fe to Fe₂O₃ before acid leaching step which favours the Fe removal step after complete leaching process.

For complete leaching of Nd-Fe-B magnet scraps, HCl acid is an alternative to H₂SO₄ acid. For example, 3-6 M HCl solution has been applied to completely dissolve the magnet scraps. However, iron leaches into the solution as Fe²⁺ which is a stable species up to a pH of 6 and cannot be selectively precipitated. Therefore, either roasting pre-treatment at 900 °C can be applied to completely oxidize Fe to Fe₂O₃ before acid leaching step or the oxidation of Fe²⁺ to Fe³⁺, generally, by adding H₂O₂ solution as an oxidizer is required. After oxidation, the separation of Fe from other elements as precipitates (α- or/and β-FeO(OH)) can be achieved at pH 2-4. The resulting solution after Fe removal is reacted with oxalic acid to form a precipitate that contains the REEs. The calcined precipitate in the form of rare earth oxides can then be returned to the initial manufacturing process for Nd-Fe-B magnets or to any other REE-related applications.

Compared to the complete leaching of Nd-Fe-B magnet scraps, selective leaching of the REEs would be practically demanded, as it would dramatically reduce the consumption of mineral acids and alkalis. Because Fe contributes to more than 60 wt.% of the magnet scraps. The basic principle of the selective leaching of the REEs relies on the pH-dependent dissolution of the calcined material which is called potential-pH diagram. The stability region of Fe₂O₃ and Nd³⁺ at the pH range of 1-7 can be used, theoretically, to dissolve Nd³⁺, leaving the iron in the residue as Fe₂O₃. Koyama, K. et al., "Selective leaching of rare-earth elements from an Nd-Fe-B magnet"; Kidorui, 2009. 54: p. 36-37, report that selective leaching of the REEs was realized by using 0.02 M HCl in an autoclave at 180 °C for 2 h after oxidative roasting the magnet scraps at 900 °C for 6 h. More than 99% of the REE recovery have been achieved with less than 5% Fe extraction. On the contrary, more than 50% of Fe was leached without roasting although more than 99% of the REEs were extracted. Selective leaching on roasted magnets at a lower temperature is also possible by increasing the initial acid concentration with prolonged etching duration.

US 5,362,459 A describes that a complete leaching of magnet slags (Nd-Fe-B magnet slags filled in a plating barrel as an anode) and a simultaneous Fe refining (cathodic deposition) could be achieved in a sulfamic acid bath with an applied current density of 50 A dm⁻². The Nd- and Fe-containing leachate was obtained after electrolysis, followed by addition of hydrofluoric acid to precipitate Nd out as NdF₃. The remaining solution was sent back to the electrolysis tank for further electro-refining. However, as both Fe³⁺ and Fe²⁺ can precipitate as FeF₃ and FeF₂ by adding HF due to their low solubility, consequently, NdF₃ could be precipitated without selectivity as a mixture of NdF₃, FeF₃ and FeF₂. How NdF₃ was further purified from the fluoride mixture was not described in the patent.

Therefore, selective precipitation of Nd from Nd- and Fe-containing leachate still needs further investigation. Furthermore, the key parameters of the leaching efficiency of the magnet slags on the anode and the current efficiency of iron deposition on the cathode were not documented in the patent. Because the two parameters are used to evaluate the selective leaching of the REEs. If the Fe leached from the anode cannot be balanced by Fe consumption on the cathode (Fe deposition), the concentration of the total dissolved Fe, including Fe³⁺ and Fe²⁺, in the electrolyte would continuously increase along with the electrolytic time that consequently would further complicate the selective Nd precipitation and purification. Additionally, more addition of acids would be required to maintain the pH of the electrolyte due to the hydrogen evolution reaction on the cathode.

Recently, Prakash Venkatesan et al., "Selective Extraction of Rare-Earth Elements from NdFeB Magnets by a Room-Temperature Electrolysis Pretreatment Step", ACS Sustainable Chemistry & Engineering, 2018. 6(7): p. 9375-9382, described an electrochemical recycling process to selectively extract REEs from Nd-Fe-B magnet scraps at room temperature. The magnet scrap was used as the anode to convert the elements present in the magnet waste into the respective hydroxides. More than 97% of the REEs leached into the solution with HCl leaving iron in the residue. The REEs were then selectively precipitated as rare-earth oxalates using oxalic acid and regenerated HCl, resulting in a closed-loop process. Calcination of the rare-earth oxalates yielded rare earth oxides of high purity (99.2%). The electrochemical process completely dissolved (anodized) Nd-Fe-B magnet scraps and precipitated more than 90% of Fe in the form of Akaganeite (FeOOH). The electricity consumption for converting Fe²⁺ to Fe³⁺ was required. Furthermore, the produced leachate as wastewater could not be recycled.

US 2015/0047469 A1 describes a method for recovering Nd from a metal powder of a rare earth element-containing alloy, e.g. a NdFeB-based permanent magnet, mixed in an electrolyte. The rare earth elements are eluted as ions by performing electrolysis in an electrolyte which contains the metal powder. Iron is eluted and precipitated as ferric hydroxide or is electrodeposited on the cathode. The cathode is made from, for example, stainless steel, Ti or graphite, the anode is insoluble. The solution to which the rare earth elements were eluted is filtered. The rare earth elements are recovered from the filtrate by solvent extraction or crystallization.

US 5 129 945 A discloses a method for recovering at least Nd from NdFeB alloy scrap by leaching NdFeB scrap in sulfuric acid, filtering the leach solution for removing insoluble trace impurities and reacting the filtered leach solution with alkali hydroxide (e.g. NaOH) or ammonium hydroxide to selectively precipitate Nd-Na double sulfate salt at pH values of 1.5 to 2 while leaving Fe in solution (col. 3, line 55 to col. 4, 44, Example 1). Fe can be precipitated in a subsequent step.

Lj J Pavlovic ET AL: "Electrodeposition of Fe Powder from Citrate Containing Electrolytes", Int. J. Electrochem. Sci. international Journal, 1 December 2010 (2010-12-01), pages 1898-1910, XP055670890 (D3) discusses polarization diagrams recorded during the electrochemical deposition of Fe powders and the structure of the Fe powders deposited from citrate-chloride supporting electrolyte respectively citrate-sulfate supporting electrolyte.

In summary, hydrometallurgical methods based on strong mineral acids leaching are indispensable as they can deal with all types of Nd-Fe-B magnets, including magnet scraps and magnet swarfs, with different composition and oxidation state. Electrochemical leaching (anodization) is an alternative to mineral acids leaching of magnet scraps/magnet swarfs. However, selective recovery of the REEs, leaving Fe behind, still needs further investigations to reduce the chemical consumption and wastewater generation.

### Summary of the invention:

In view of the problems associated with the hydrometallurgical recycling of Nd-Fe-B magnet scraps, it is an object of the present invention to provide a method for recovery of the REEs from Nd-Fe-B magnet scraps, which allows the selective leaching and recovery of the REEs with high efficiency and in a more environmentally friendly and cost-effective way.

The object is achieved with the method according to claim 1. Advantageous embodiments of this method are subject matter of the depending claims or will become apparent from the following detailed description and examples taken in conjunction with the drawings.

It has been found, according to the present invention, that the Nd-Fe-B magnet scraps are completely dissolved in an appropriately selected aqueous solution, namely a sulfate-citrate-aqueous solution, by electrochemical anodization while simultaneously, metallic iron (Fe) is obtained on the cathode by electrodeposition. It has been discovered, however, according to the present invention, that the REE metals such as neodymium (Nd) cannot be electrodeposited from aqueous solution. For the electrolysis process in an electrochemical reactor, in particular in an electrochemical cell, the Nd-Fe-B magnet scraps - preferably attracted by an external magnet - serve as an anode and a conductive material, e.g., Fe, Cu, serves as a cathode, both of which are immersed in the aqueous electrolyte, so that the Nd-Fe-B magnet scraps are anodized into solution and iron (Fe) is deposited on the cathode.

The pH value in the electrolyte rises as the operation proceeds because of the hydrogen evolution reaction on the cathode that releases OH⁻ into the electrolyte. The pH value should thus be periodically (or continuously) adjusted downwardly to maintain a stable electrolysis process. Perferably, the pH value is maintained between 3.5 and 4.5 during the electrolysis process by continuously or repeatedly adding an acid to the electrolyte.

According to the present invention, rare-earth-sodium double salts, e.g., neodymium-sodium-sulfate double salts, (Nd, Na)(SO₄)₂, are selectively precipitated after the electrolysis process by adding Na₂SO₄ to the electrolyte which effectively separates REEs from the electrolyte. The REEs are then recovered by filtering the electrolyte.

After this filtration the electrolyte can be further re-used for the next batch of electrolysis.

With the proposed method REEs can be selectively leached and recovered from Nd-Fe-B magnet scraps with high efficiciency of the REEs recovery of more than 90% and minimum production costs. The method does not require any roasting pretreatment and can be performed at room temperature. The electrochemical scheme allows minimal input of chemicals and produces no output of chemical waste, in partcular does not generate any wastewater. The method also allows the recovery of the pure metallic iron (Fe) deposited on the cathode.

### Brief description of the drawings:

The proposed method will be described in the following by way of examples in connection with the accompanying figures showing:
- Fig. 1: A schematic illustration of an embodiment of the proposed method for selective recovery of the REEs from sintered Nd-Fe-B magnet scraps based on an electrolysis technique;
- Fig. 2A: Backscattered electron image of the recovered REEs in the form of (RE, Na)(SO₄)₂ double salts; and
- Fig. 2B: X-ray diffraction pattern of the recovered REEs of Fig. 2A.

### Embodiments of the invention:

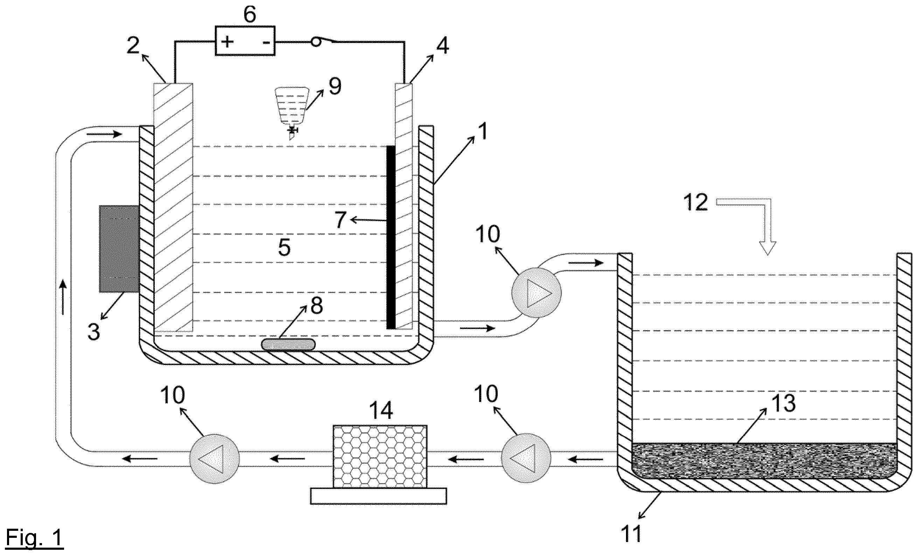

The process steps of an exemplary embodiment of the proposed method for the REEs recovery from the Nd-Fe-B magnet scraps are described in the following based on the illustration in Fig. 1:
1. Effectuating an electrolysis process by utilizing an electrochemical cell **1** which includes the Nd-Fe-B magnet scraps **2** held by an external magnet **3.** The Nd-Fe-B magnet scraps **2** serve as an anode and a conductive material **4** such as Cu sheet serves as a cathode. Filling the cell with an electrolyte bath **5** containing iron(II) sulfate heptahydrate (FeSO₄·7H₂O), ammonium sulfate ((NH₄)₂SO₄), sodium citrate dihydrate (Na₃C₆H₅O₇·2H₂O) and boric acid (H₃BO₃). Connecting the anode and cathode with a power supply **6,** so that the Nd-Fe-B magnet scraps are anodized into solution, while metallic iron (Fe) **7** is deposited in the cathode simultaneously with agitation by an agitator **8.**
2. During the electrolysis, adding concentrated sulfuric acid **9** to maintain the pH between 3.5-4.5 of the electrolyte.
3. After electrolysis, using a pump **10** to transfer the electrolyte to the precipitation tank **11,** followed by adding sodium sulfate (Na₂SO₄) salt **12** and heating the solution for 2 hours to precipitate REEs as rare-earth-sodium double salts **13.**
4. Separating the rare-earth-sodium double salts using a filter **14** and recycling the electrolyte bath back to step 1 so that it can be reused.

### Example

Referring to Fig. 1, the present invention for the REEs and the Fe metal recovery from the Nd-Fe-B magnet scraps includes essentially three steps. The whole process can be repeated until the rare-earth-sodium double salts are precipitated and recovered.

### Step 1: Electrolysis

The first step involves effectuating an electrolysis process by utilizing an electrochemical cell which includes the sintered Nd-Fe-B magnets (model material for Nd-Fe-B magnet scraps) serving as an anode and a Cu sheet serving as a cathode. Filling the cell with an electrolyte bath containing 0.8 mol L⁻¹ iron(II) sulphate heptahydrate (FeSO₄·7H₂O), 0.4 mol L⁻¹ ammonium sulphate ((NH₄)₂SO₄), 0.175 mol L⁻¹ sodium citrate dihydrate (Na₃C₆H₅O₇·2H₂O) and 0.4 mol L^{- 1} boric acid (H₃BO₃). The complexing reagents of ammonium sulphate and sodium citrate are used to prevent the precipitation of Fe²⁺/Fe³⁺ in the form of Fe(OH)₂/Fe(OH)₃ at the cathode surface which favors the Fe deposition. Connecting the anode and cathode with a potentiostat and maintaining the applied current of 0.2 A, namely, current density of 2.5 A m⁻² on the anode and 1.25 A m⁻² on the cathode, so that the Nd-Fe-B magnets are anodized into solution, while metallic Fe is deposited in the cathode simultaneously. Every 10 min during electrolysis, adding concentrated sulfuric acid to maintain the pH between 3.5-4.5 of the electrolyte. The chemical half-reaction equation of this step is as follows:

Nd₂Fe₁₄B - 37e⁻ → 2Nd³⁺ + 14Fe²⁺ + B³⁺ (1) anodic reaction

Neodymium (Nd) is accumulated in the electrolyte bath. While Fe is dissolved at the anode is deposited on the cathode:

Fe²⁺ + 2e⁻ → Fe (2) cathodic reaction

The concentration of Fe²⁺ in the electrolyte bath (net consumption of Fe²⁺) depends on its leaching rate on the anode and the deposition rate on the cathode. As hydrogen evolution reaction happens along with Fe deposition which consumes H⁺, H₂SO₄ solution must be added to keep the pH of the electrolyte in the range of 3.5~4.5.

2H⁺ + 2e⁻ → H₂ ↑ (3) cathodic reaction

Step 1 takes place in the electrolytic cell. The electrolysis is interrupted as one batch when 50 grams per liter of Nd-Fe-B magnet scraps is leached (dissolved). The leaching efficiency is 99.9%. As the transition metal (mainly Fe) contributes to 70.9%-75.7 at% of Nd-Fe-B magnet scraps, approximately, 70.9%-75.7% of the current contributes to the leaching of Fe from the anode. The current efficiency of Fe deposition on the cathode turns out in a range of 71%-75%. As a results, the Fe leached from the anode is balanced by Fe deposition on the cathode.

Therefore, the net consumption of Fe is around zero as a whole which enables a relative stable composition of the electrolyte. The pure iron deposited on the cathode can be collected for use in the manufacturing industries.

### Step 2: Selective precipitation of REEs by adding sodium sulfate

The second step involves adding 8.14 grams per litre of sodium sulfate (Na₂SO₄) to the electrolyte bath to produce rare-earth-sodium sulfate double salts ((RE, Na)(SO₄)₂) after (optionally) adjusting the pH of the solution/electrolyte to 3.5. The reason for adjusting the pH of the electrolyte before REE precipitation is to keep the pH range of the solution within 3.5~4.5, so it can be reused for the next batch of electrolysis. The complexing reagents of both sodium citrate and ammonium sulfate in the present example play key roles on preventing the co-precipitation of Fe²⁺ and Fe³⁺ with REE³⁺.

This step takes place in the precipitation tank. The (RE, Na)(SO₄)₂ double salts precipitate either by heating the solution to 70 °C for 2 hours or naturally at room temperature for 3 days without agitation and it is allowed to settle.

### Step 3: Filtration

The third step involves separating the (RE, Na)(SO₄)₂ double salts and recycling the electrolyte bath back to step 1, so that it can be reused.

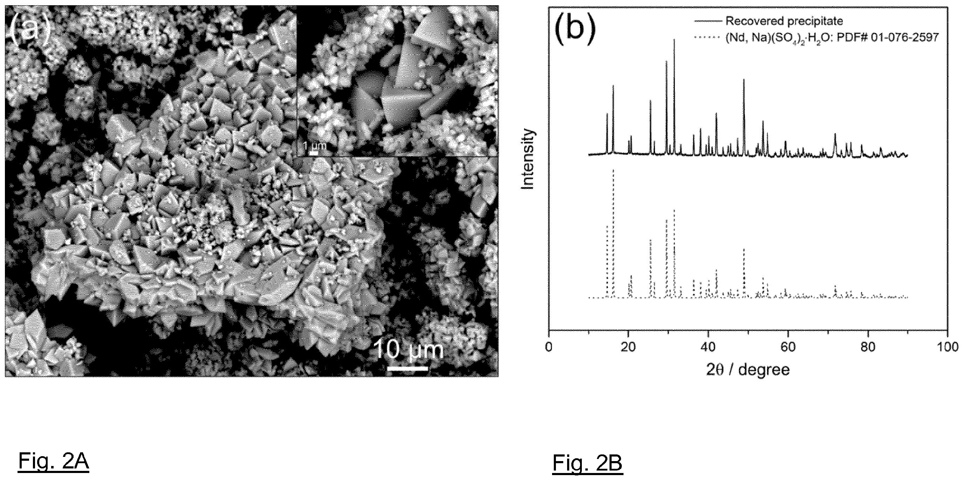

This step is carried out by a filter where the precipitate of (RE, Na)(SO₄)₂ double salts is retained as shown in FIG. 2A. The X-ray diffraction (XRD) analysis (Fig. 2B) shows that the diffraction peaks are well indexed to the (Nd, Na)(SO₄)₂·H₂O (PDF# 01-076-2597) phase. The filtrate is recycled back to the electrolysis cell.

The present inventive method for the recovery of the REEs (and optionally Fe metal) from Nd-Fe-B magnet scraps has many advantageous features. It achieves a very high efficiency of the REEs recovery: In the above example 92.5% of the REEs in the magnets is recovered with a high purity of 99.4%. It also incurs minimal chemicals and energy costs: the overall process realizes "selective" leaching of the REEs that consumes only 0.34 kg of sulfuric acid (H₂SO₄) per kilo of magnet scraps and sodium sulfate (Na₂SO₄). The high-temperature roasting pre-treatment of magnets is avoided. The energy consumption calculated per kilogram of Nd-Fe-B magnet is 1.36 kWh kg⁻¹. It further confirms with high environmental standard: recyclable electrolyte, no hazardous waste, and minimal workplace hazards. Finally, it also produces pure iron metal, which can be utilized in the manufacturing industries.

Although specific embodiments of the present invention have been described with reference to the drawings, it should be understood that such embodiments are by way of example only and merely illustrative of but a small number of the many possible specific embodiments which can represent applications of the principles of the present invention. Various changes and modifications are within the scope of the present invention as defined in the claims.

## Claims

1. A method for recovery of the rare-earth elements from Nd-Fe-B magnet scraps, comprising at least the steps of:
a. anodically oxidizing said Nd-Fe-B magnet scraps (2) in an electrochemical reactor (1) which at least comprises an anode formed of said Nd-Fe-B magnet scraps (2), a cathode and an aqueous liquid electrolyte (5),
wherein the aqueous liquid electrolyte (5) is selected such that during the anodic oxidation said Nd-Fe-B magnet scraps (2) are leached in the electrolyte (5) and Fe metal (7) is deposited on the cathode and wherein a sulfate-citrate aqueous solution is selected as said aqueous liquid electrolyte (5);
b. after said anodic oxidation step adding Na₂SO₄ (12) to the electrolyte (5) to precipitate rare-earth elements; and
c. filtering said electrolyte (5) to recover the precipitated rare-earth elements in the form of rare-earth-sodium sulfate double salts (13).

2. The method according to claim 1,
**characterized in that** an aqueous solution at least consisting of iron sulfate, one or several complexing reagents and optionally a pH buffer is selected as said aqueous liquid electrolyte (5).

3. The method according to claim 2,
**characterized in that** the one or several complexing reagents are selected to prevent precipitation of Fe²⁺/Fe³⁺ in the form of Fe(OH)₂/Fe(OH)₃ at the cathode during the anodic oxidation step and to prevent co-precipitation of Fe²⁺ and Fe³⁺ after adding the Na₂SO₄ (12) to the electrolyte (5).

4. The method according to claim 3,
**characterized in that** at least one of ammonium sulfate and sodium citrate is used as said one or several complexing reagents.

5. The method according to one or several of claims 1 to 4,
**characterized in that** after the filtering step said filtered electrolyte (5) is recycled to the electrochemical reactor (1) for re-use in another anodic oxidation step.

6. The method according to one or several of claims 1 to 5,
**characterized in that** a pH value of the electrolyte (5) is maintained between 3.5 and 4.5 during said anodic oxidation step by continuously or repeatedly adding an acid (9) to the electrolyte (5).

7. The method according to one or several of claims 1 to 6,
**characterized in that** after adding the Na₂SO₄ (12) the electrolyte (5) is heated for one or several hours to support the precipitation of the rare-earth elements.

8. The method according to one or several of claims 1 to 7,
**characterized in that** a concentration of total Fe ions (Fe²⁺ and Fe³⁺) in the electrolyte (5) is maintained balanced by adjusting the current efficiency of Fe deposition on the cathode in the range of 71%-75%, and the leaching efficiency of Nd-Fe-B magnet scraps (2) on the anode close to 100%.

## Patentansprüche

1. Verfahren zur Rückgewinnung von Seltene-Erden-Elementen aus Nd-Fe-B-Magnetabfällen, umfassend mindestens die Schritte:
a. anodisches Oxidieren der Nd-Fe-B-Magnetabfälle (2) in einem elektrochemischen Reaktor (1), der mindestens eine aus den Nd-Fe-B-Magnetabfällen (2) gebildete Anode, eine Kathode und einen wässrigen flüssigen Elektrolyten (5) umfasst,
wobei der wässrige flüssige Elektrolyt (5) so gewählt ist, dass während der anodischen Oxidation die Nd-Fe-B-Magnetabfälle (2) in dem Elektrolyten (5) ausgelaugt werden und Fe-Metall (7) auf der Kathode abgeschieden wird und wobei eine wässrige Lösung aus Sulfat-Citrat als wässriger flüssiger Elektrolyt (5) ausgewählt wird;
b. nach dem anodischen Oxidationsschritt Zugabe von Na₂SO₄ (12) zu dem Elektrolyten (5), um Seltene-Erden-Elemente auszufällen; und
c. Filtern des Elektrolyten (5) zur Rückgewinnung der ausgefällten Seltene-Erden-Elemente in Form von Seltene-Erden-Natriumsulfat-Doppelsalzen (13).

2. Verfahren nach Anspruch 1,
**dadurch gekennzeichnet, dass** als wässriger flüssiger Elektrolyt (5) eine wässrige Lösung, mindestens bestehend aus Eisensulfat, einem oder mehreren Komplexreagenzien und gegebenenfalls einem pH-Puffer ausgewählt wird.

3. Verfahren nach Anspruch 2,
**dadurch gekennzeichnet, dass** die eine oder mehrere Komplexreagenzien zur Verhinderung der Fällung von Fe²⁺/Fe³⁺ in Form von Fe(OH)₂/Fe(OH)₃ an der Kathode während des anodischen Oxidationsschrittes und zur Verhinderung einer Co-Fällung von Fe²⁺ und Fe³⁺ nach Zugabe des Na₂SO₄ (12) zum Elektrolyten (5) ausgewählt werden.

4. Verfahren nach Anspruch 3,
**dadurch gekennzeichnet, dass** als eine oder mehrere Komplexreagenzien mindestens eine von Ammoniumsulfat und Natriumcitrat verwendet wird.

5. Verfahren nach einem oder mehreren der Ansprüche 1 bis 4,
**dadurch gekennzeichnet, dass** der gefilterte Elektrolyt (5) nach dem Filterschritt in den elektrochemischen Reaktor (1) zur Wiederverwendung in einen weiteren anodischen Oxidationsschritt zurückgeführt wird.

6. Verfahren nach einem oder mehreren der Ansprüche 1 bis 5,
**dadurch gekennzeichnet, dass** während des anodischen Oxidationsschrittes ein pH-Wert des Elektrolyten (5) zwischen 3,5 und 4,5 gehalten wird, indem eine Säure (9) kontinuierlich oder wiederholt dem Elektrolyten (5) zugegeben wird.

7. Verfahren nach einem oder mehreren der Ansprüche 1 bis 6,
**dadurch gekennzeichnet, dass** nach Zugabe des Na₂SO₄ (12) der Elektrolyt (5) für eine oder mehrere Stunden erhitzt wird, um die Fällung der Seltene-Erden-Elemente zu unterstützen.

8. Verfahren nach einem oder mehreren der Ansprüche 1 bis 7,
**dadurch gekennzeichnet, dass** eine Konzentration von gesamten Fe-Ionen (Fe²⁺ und Fe³⁺) im Elektrolyten (5) durch Einstellen der Stromeffizienz der Fe-Abscheidung auf der Kathode im Bereich von 71%-75% und die Auslaugungseffizienz von Nd-Fe-B-Magnetabfällen (2) auf der Anode nahe 100% gehalten wird.

## Revendications

1. Procédé de récupération des éléments de terres rares à partir de déchets d'aimants Nd-Fe-B, comprenant au moins les étapes consistant à :
a. l'oxydation anodique desdits déchets d'aimants Nd-Fe-B (2) dans un réacteur électrochimique (1) qui comprend au moins une anode formée desdits déchets d'aimants Nd-Fe-B (2), une cathode et un électrolyte liquide aqueux (5),
l'électrolyte liquide aqueux (5) étant choisi de telle sorte que, pendant l'oxydation anodique, lesdits déchets d'aimants Nd-Fe-B (2) sont lixiviés dans l'électrolyte (5) et le métal Fe (7) est déposé sur la cathode et une solution aqueuse de citrate de sulfate est choisie comme ledit électrolyte liquide aqueux (5) ;
b. après ladite étape d'oxydation anodique, l'ajout du Na₂SO₄ (12) à l'électrolyte (5) pour précipiter les éléments des terres rares ; et
c. la filtration dudit électrolyte (5) pour récupérer les éléments de terres rares précipités sous la forme de sels doubles de sulfate de sodium et de terres rares (13).

2. Procédé selon la revendication 1,
**caractérisé en ce qu'**une solution aqueuse au moins constituée de sulfate de fer, d'un ou plusieurs réactifs complexants et éventuellement d'un tampon de pH est choisie comme ledit électrolyte liquide aqueux (5).

3. Procédé selon la revendication 2,
**caractérisé en ce qu'**un ou plusieurs réactifs complexants sont choisis pour empêcher la précipitation de Fe²⁺/Fe³⁺ sous la forme de Fe (OH)₂/Fe(OH)₃ au niveau de la cathode pendant l'étape d'oxydation anodique et pour empêcher la co-précipitation de Fe²⁺ et Fe³⁺ après l'ajout du Na₂SO₄ (12) à l'électrolyte (5).

4. Procédé selon la revendication 3,
**caractérisé en ce qu'**au moins l'un des produits, parmi le sulfate d'ammonium et le citrate de sodium, est utilisé en tant qu'un ou plusieurs desdits réactifs complexants.

5. Procédé selon une ou plusieurs des revendications 1 à 4,
**caractérisé en ce que**, après l'étape de filtration, ledit électrolyte filtré (5) est recyclé vers le réacteur électrochimique (1) pour une réutilisation dans une autre étape d'oxydation anodique.

6. Procédé selon une ou plusieurs des revendications 1 à 5,
**caractérisé en ce qu'**une valeur de pH de l'électrolyte (5) est maintenue entre 3,5 et 4,5 pendant ladite étape d'oxydation anodique par un ajout continu ou répété d'un acide (9) à l'électrolyte (5).

7. Procédé selon une ou plusieurs des revendications 1 à 6,
**caractérisé en ce qu'**après l'ajout du Na₂SO₄ (12), l'électrolyte (5) est chauffé pendant une ou plusieurs heures pour supporter la précipitation des éléments des terres rares.

8. Procédé selon une ou plusieurs des revendications 1 à 7,
**caractérisé en ce qu'**une concentration d'ions Fe totaux (Fe²⁺ et Fe³⁺) dans l'électrolyte (5) est maintenue équilibrée par ajustement de l'efficacité actuelle du dépôt de Fe sur la cathode dans la plage de 71 % à 75 %, et l'efficacité de lixiviation des déchets d'aimant Nd-Fe-B (2) sur l'anode proche de 100 %.
